# FASCICULE DE BREVET EUROPEEN

(11) **EP 1 512 858 B1**
(45) Date de publication et mention de la délivrance du brevet: **10.12.2008**
(21) Numéro de dépôt: 04300166.8
(22) Date de dépôt: 26.03.2004
(51) Int. Cl.: F02D 13/02, F02B 31/08

(54) **Moteur à combustion interne comportant des moyens d'optimisation du remplissage en air des cylindres**
Brennkraftmaschine mit Einrichtung zur Optimierung der Zylinderluftbefüllung
Internal combustion engine having means to optimise the air filling in the cylinders

(30) Priorité: 27.03.2003 FR 0303744
(43) Date de publication de la demande: 09.03.2005
(73) Titulaire: RENAULT S.A.S., 92100 Boulogne Billancourt (FR)
(72) Inventeur: Christou, Panagiotis, 94300 Vincennes (FR); Danet, Yvan, 91220 Bretigny sur Orge (FR); Marti-Moreno, Marta, 92500 Rueil Malmaison (FR)

(56) Documents cités:
- WO-A-00/71881
- US-A- 4 703 734
- US-A- 4 759 321
- US-A- 5 239 960
- US-A1- 2002 179 042

## Description

La présente invention concerne les moteurs à combustion interne, tels que les moteurs Diesel à injection directe ou les moteurs à allumage commandé, et, plus particulièrement, elle concerne un tel moteur comportant des moyens pour améliorer la combustion par optimisation du mélange air-carburant dans les cylindres.

On sait que pour optimiser la combustion et par conséquent réduire les émissions de polluants et augmenter les performances d'un moteur à combustion interne, il est souhaitable d'assurer dans le cylindre le meilleur mélange possible de comburant, c'est à dire d'air, et de carburant.

Pour cela, une méthode bien connue est de générer dans le cylindre un mouvement d'air tourbillonnaire propre à brasser l'air introduit dans le cylindre pour par exemple en homogénéiser les caractéristiques thermodynamiques et assurer le mélange le plus adéquat possible avec le carburant également injecté dans le cylindre. Ce mouvement d'air tourbillonnaire peut, de manière générale, se décomposer en un mouvement de rotation sensiblement autour de l'axe du cylindre, ce mouvement étant classiquement appelé "swirl", et un mouvement de rotation selon un axe perpendiculaire à l'axe du cylindre, appelé "tumble". Différentes méthodes et différents systèmes ont déjà été proposés pour générer ou favoriser plus ou moins ces mouvements, en fonction du but recherché qui dépend lui-même des conditions de fonctionnement du moteur, telles que charge, ou régime de rotation, etc., voir par exemple les documents US 2002/0179042 A1 ou US 4,703,734. Par exemple, dans un moteur à allumage commandé on peut rechercher une plus forte concentration de carburant à proximité de la bougie lors de l'allumage, ou inversement avoir une répartition plus homogène du carburant dans le cylindre.

La présente invention vise particulièrement à améliorer le swirl, en tant que moyen susceptible d'optimiser la combustion. Toutefois, si ce swirl est particulièrement avantageux en fonctionnement du moteur à faible charge, il n'en est pas forcément de même à forte charge. En effet, on sait que la génération de swirl dans le cylindre se fait aux dépens de la perméabilité de la culasse, c'est à dire de la facilité de l'air à pénétrer dans le cylindre en passant dans les conduits d'admissions, et en conséquence la génération de swirl est pénalisante pour le remplissage en air frais et donc pour les performances.

Une explication à cela est donnée ci-après.

Dans les moteurs Diesel, et éventuellement dans les moteurs à essence, à injection directe, le carburant est injecté dans les cylindres par un injecteur que l'on cherche classiquement à positionner aussi central et coaxial avec le cylindre que possible, et en face d'un creux, ou "bol", aménagé dans le piston, de manière connue en soi. Cette disposition crée une contrainte majeure pour la disposition des soupapes et des conduits d'admission dans la culasse, et conduit à rechercher le meilleur compromis possible entre perméabilité et swirl.

En effet, le mélange de l'air et du carburant est réalisé avec l'aide du swirl généré dans le cylindre par un mouvement de rotation de l'air engendré lors de l'admission et amplifié dans le bol du piston au cours de la compression. On notera incidemment que la valeur de swirl est classiquement déterminée comme étant le rapport entre la vitesse de rotation de l'air et la vitesse de rotation du moteur, un swirl de 1 correspondant donc théoriquement au cas ou l'air admis fait un tour dans le cylindre pendant un tour moteur, entre les points morts hauts de début d'admission et de fin de compression.

Le swirl est couramment créé lors de l'admission par deux effets agissants simultanément:
- l'orientation des vecteurs vitesse de l'air autour de la soupape d'admission, une composante tangentielle étant créée grâce à une forme hélicoïdale du conduit d'admission dans la culasse;
- la répartition des vitesses à la sortie de la soupape d'admission, le swirl ainsi créé dans le cylindre dépendant donc de l'excentration du conduit d'admission par rapport à l'axe du cylindre.

Dans une culasse ayant au moins deux soupapes d'admission par cylindre, on peut combiner des types de conduits d'admission différents pour créer le mouvement de swirl. Par exemple, on peut utiliser un conduit hélicoïdal pour une soupape et un conduit tangentiel, c'est à dire débouchant sensiblement tangentiellement à la périphérie de la chambre de combustion pour l'autre soupape.

Un inconvénient de ces solutions de génération de swirl est qu'elles diminuent fortement la perméabilité de la culasse et donc le remplissage en air frais des cylindres et les performances moteur, car d'une par l'air est freiné par les formes incurvées des conduits, et d'autre part le mouvement de l'air imprimé par une des soupapes peut venir contrarier l'entrée de l'air par la soupape voisine.

La présente invention a pour but de résoudre les problèmes ci-dessus et vise en particulier à proposer un nouveau moyen de générer un mouvement de swirl tout en conservant des conduits d'admission offrant une perméabilité maximale de la culasse pour l'admission d'air frais.

Avec ces objectifs en vue, l'invention a pour objet un moteur à combustion interne à injection directe de carburant dans les cylindres et dont chaque cylindre comporte au moins deux soupapes d'admission , les conduits d'admission débouchant au niveau de chaque soupape d'admission sont des conduits droits et les lois de commande des soupapes d'admission sont différentes, une seconde des soupapes d'admission étant commandée pour s'ouvrir avec un retard prédéterminé par rapport à une première soupape, et toutes les soupapes d'admission se fermant sensiblement en même temps.

Il est précisé que "conduit droit" signifie ici, selon le sens que l'homme du métier donne classiquement à cette dénomination, un conduit d'admission correspondant à chaque soupape, ce conduit étant sensiblement rectiligne dans la culasse, du répartiteur d'admission jusqu'à la soupape concernée. Ceci doit donc s'entendre comme opposé aux conduits d'admission hélicoïdaux ou tangentiels, évoqués préalablement pour la génération de swirl, et qui présentent donc une courbure plus ou moins forte avant de déboucher dans la chambre de combustion.

L'utilisation de tels conduits droits, au lieu des conduits hélicoïdaux et/ou tangentiels classiquement utilisés pour la génération de swirl, permet d'accroître la perméabilité de la culasse à l'admission, et donc d'assurer un remplissage en air frais maximum et donc une puissance maximum délivrable par le moteur. En particulier, l'utilisation de ces conduits droits permet d'augmenter la perméabilité de la culasse de 50 à 80% en fonction de l'alésage du moteur, par rapport à des moteurs équivalents mais comportant des conduits hélicoïdaux ou tangentiels.

Par ailleurs, des essais ont montré que l'utilisation de lois de commande différentes pour les soupapes d'admission, et en particulier l'ouverture retardée d'une des soupapes d'admission par rapport à une autre, s'est avéré bénéfique pour la génération de swirl, comme on le verra par la suite.

Dans le cas classique de moteur où chaque cylindre comporte deux soupapes d'admission, le décalage de l'ouverture entre les soupapes est préférentiellement compris entre 40 et 50° d'angle de rotation de vilebrequin. Selon l'invention, la loi d'ouverture de la soupape s'ouvrant en dernier est une petite loi, c'est à dire que non seulement la durée d'ouverture mais aussi l'amplitude de cette ouverture est réduite par rapport à celle de la soupape s'ouvrant en premier.

De ce fait, on comprendra aisément que l'utilisation de telles lois particulières tend à diminuer la perméabilité de la culasse, mais il a été constaté que un dimensionnement adapté de ces lois différentes permet de conserver le remplissage naturel du moteur, voire à l'améliorer à bas régime par rapport à l'utilisation de lois identiques pour les deux soupapes.

Une hypothèse pour expliquer ce phénomène est que, si les deux soupapes s'ouvrent simultanément, la vitesse de l'air passant par chaque soupape dés leur ouverture est plus faible que si une seule soupape est ouverte, et de plus l'air admis par une soupape contrarie l'arrivée dans la chambre de combustion de l'air admis par l'autre soupape qui est géométriquement voisine sur la culasse, et que, contrairement à cela, par une loi de commande présentant une ouverture décalée dans le temps, l'invention induit un premier flux d'air pénétrant dans la chambre de combustion, dont la vitesse est plus élevée et donc plus propice à générer un mouvement de swirl, et lorsque la deuxième soupape s'ouvre l'air alors amené par cette deuxième soupape est en quelque sorte entraîné dans la chambre de combustion par le mouvement déjà initié par le premier flux d'air.

Les résultats globalement avantageux de l'invention sur le plan de la génération de swirl et sur le plan de la diminution des gaz brûlés résiduels s'avèrent en fait résulter, d'une part, de la diminution du refoulement en fin d'admission, à bas régime, grâce à diminution de la perméabilité, ce qui entraîne aussi une diminution des gaz brûlés résiduels, et d'autre part, le déphasage des lois d'admission crée un schéma pulsatoire favorable en début d'admission, le piston étant alors soumis à une pression d'admission plus forte. Ceci diminue le refoulement pendant la période où les soupapes d'admission et d'échappement peuvent être entrouvertes simultanément, surtout à des régimes élevés, et tend ainsi à augmenter le remplissage. De plus, ceci diminue le travail d'aspiration du moteur, et par conséquent les pertes par pompage, surtout à hauts régimes.

D'autres caractéristiques et avantages apparaîtront dans la description qui va être faite d'un exemple de mise en oeuvre de l'invention.

On se reportera aux dessins annexés dans lesquels :
- la figure 1 est une représentation schématique des conduits d'admission d'un cylindre d'un moteur à deux soupapes d'admission et deux soupapes d'échappement par cylindre,
- la figure 2 est un tracé représentant un exemple des lois de commande des soupapes d'un cylindre, représentées par la levée de soupape en fonction de l'angle de rotation du vilebrequin.

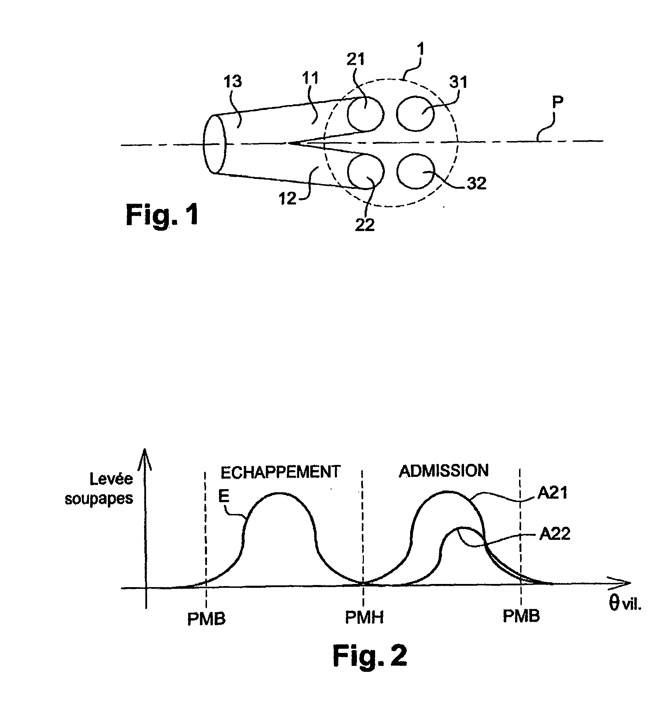

La figure 1 représente schématiquement les conduits d'admission 11, 12 correspondant à un même cylindre 1, provenant d'une entrée commune 13 dans la culasse et débouchants respectivement par des soupapes d'admission 21, 22, les soupapes d'échappement étant repérées 31 et 32. On notera la rectilinéarité des conduits 11, 12 et leur symétrie par rapport à un plan P orthogonal à la direction d'alignement des cylindres.

Sur le graphique de la figure 2, on observera le déphasage entre les lois d'admission des deux soupapes d'admission 21 et 22. Le tracé A21 représente la levée de la soupape d'admission 21 et le tracé A22 représentant la levée de la soupape 22. Le déphasage entre les tracés A21 et A22 est de l'ordre de 40 à 50° d'angle de vilebrequin pour l'ouverture des soupapes, alors que leur fermeture est sensiblement simultanée. On notera aussi la levée maximale de la deuxième soupape 22 qui est nettement plus petite que celle de la soupape 21 qui s'ouvre en premier lieu.

Des résultats d'essais effectués par les inventeurs ont montré que, avec un décalage angulaire de 50° d'angle de rotation de vilebrequin pour l'ouverture des soupapes d'admission, et en gardant leur fermeture simultanée, on a pu obtenir un swirl de 0.92, alors qu'il est pratiquement nul lors de l'utilisation de conduits droits et avec des lois de commande identiques sur les deux soupapes d'admission.

Selon une application particulière de l'invention, on l'utilise dans un moteur à distribution variable, c'est à dire dont les lois de commande d'ouverture de soupapes peuvent être modifiées en cours de fonctionnement, comme cela est connu de l'homme du métier. Dans le cas d'un tel procédé de gestion du fonctionnement du moteur, l'utilisation du décalage de la loi de commande d'une soupape permet d'adapter le fonctionnement du moteur pour une faible charge, alors qu'un swirl élevé est souhaité, mais de réduire fortement ce swirl en forte charge en supprimant ou réduisant ce décalage, en profitant alors de la perméabilité accrue de la culasse grâce aux conduits droits pour limiter les pertes de charge dans les conduits d'admission.

## Revendications

1. Moteur à combustion interne à injection directe de carburant dans les cylindres (1) et à distribution variable comportant au moins deux soupapes d'admission (21, 22) par cylindre (1) dont les ouvertures sont décalées et se fermant sensiblement en même temps, et dont les lois de commande (A21, A22) sont fonction de l'angle de rotation du vilebrequin, et un conduit d'admission (11, 12) droit débouchant au niveau de chaque soupape d'admission (21, 22),
**caractérisé en ce que :**
- les conduits d'admission (11, 12) sont disposés symétriquement par rapport à un plan P orthogonal à la direction d'alignement des cylindres (1), et
- la durée et l'ouverture de la soupape (22) s'ouvrant en dernier sont réduites par rapport à celles de la soupape (21) s'ouvrant en premier.

2. Moteur à combustion interne selon la revendication 1, **caractérisé en ce que** le décalage de l'ouverture entre les soupapes d'admission (21, 22) est compris entre 40 et 50° d'angle de rotation de vilebrequin.

3. Moteur à combustion interne selon la revendication 1, **caractérisé en ce que** les lois de commande d'ouverture (A21, A22) des soupapes (21, 22) peuvent être modifiées en cours de fonctionnement de manière à utiliser le décalage de la loi de commande d'une soupape pour adapter le fonctionnement du moteur à la charge de celui-ci.

4. Moteur à combustion interne selon la revendication 1, **caractérisé en qu'**il est un moteur à distribution variable.

5. Procédé de gestion du fonctionnement d'un moteur selon la revendication 4, **caractérisé en ce qu'**on utilise un décalage de la loi de commande d'ouverture d'une soupape d'admission pour adapter le fonctionnement du moteur pour une faible charge, et en forte charge on supprime ou réduit ce décalage.

## Claims

1. Internal combustion engine with direct injection of fuel into the cylinders (1) and with variable distribution comprising at least two inlet valves (21, 22) per cylinder (1) whose openings are offset and close substantially at the same time, and whereof the laws of control (A21, A22) are a function of the angle of rotation of the crankshaft, and a straight inlet duct (11, 12) emerging at each inlet valve (21, 22),
**characterized in that:**
- the inlet ducts (11, 12) are placed symmetrically relative to a plane P orthogonal to the direction of alignment of the cylinders (1), and
- the duration and the opening of the valve (22) opening last are reduced relative to those of the valve (21) opening first.

2. Internal combustion engine according to Claim 1, **characterized in that** the offset of the opening between the inlet valves (21, 22) is between 40 and 50° of the angle of rotation of the crankshaft.

3. Internal combustion engine according to Claim 1, **characterized in that** the laws of control of opening (A21, A22) of the valves (21, 22) may be modified during operation so as to use the offset of the law of control of a valve in order to adapt the operation of the engine to the load of the latter.

4. Internal combustion engine according to Claim 1, **characterized in that** it is a variable distribution engine.

5. A method for managing the operation of an engine according to Claim 4, **characterized in that** an offset of the law of control of the opening of an inlet valve is used in order to adapt the operation of the engine for a light load, and for a heavy load this offset is eliminated or reduced.

## Patentansprüche

1. Verbrennungsmotor mit Kraftstoff-Direkteinspritzung in die Zylinder (1) und variabler Ventilsteuerung, der mindestens zwei Einlassventile (21, 22) pro Zylinder (1) aufweist, deren Öffnungen versetzt sind und sich im Wesentlichen gleichzeitig schließen, und deren Steuergesetze (A21, A22) von dem Rotationswinkel der Kurbelwelle abhängen, und eine gerade Einlassleitung (11, 12), die auf dem Niveau jedes Einlassventils (21, 22) mündet,
**dadurch gekennzeichnet:**
- **dass** die Einlassleitungen (11, 12) symmetrisch zu einer Ebene P im rechten Winkel zur Fluchtungsrichtung der Zylinder (1) angeordnet sind, und
- **dass** die Dauer und die Öffnung des Ventils (22), das sich zuletzt öffnet, im Vergleich zu denen des Ventils (21), das sich zuerst öffnet, verringert sind.

2. Verbrennungsmotor nach Anspruch 1, **dadurch gekennzeichnet, dass** der Versatz der Öffnung zwischen den Einlassventilen (21, 22) zwischen 40 und 50° Kurbelwellenrotationswinkel liegt.

3. Verbrennungsmotor nach Anspruch 1, **dadurch gekennzeichnet, dass** die Öffnungssteuergesetze (A21, A22) der Ventile (21, 22) im Laufe des Betriebs derart geändert werden können, dass der Versatz des Steuergesetzes eines Ventils verwendet wird, um den Betrieb des Motors an seine Belastung anzupassen.

4. Verbrennungsmotor nach Anspruch 1, **dadurch gekennzeichnet, dass** er ein Motor mit variabler Ventilsteuerung ist.

5. Verwaltungsverfahren des Betriebs eines Motors nach Anspruch 4, **dadurch gekennzeichnet, dass** man einen Versatz des Öffnungssteuergesetzes eines Einlassventils verwendet, um den Betrieb des Motors für eine geringe Last anzupassen, und bei starker Belastung diesen Versatz weglässt oder verringert.
